Europäisches Patentamt

European Patent Office

Office européen des brevets

(19)

(11) Veröffentlichungsnummer : **0 152 617**
**B1**

(12) **EUROPÄISCHE PATENTSCHRIFT**

(45) Veröffentlichungstag der Patentschrift :
23.03.88

(21) Anmeldenummer : 84116183.9

(22) Anmeldetag : 22.12.84

(51) Int. Cl.⁴ : **F 16 J 15/02,** F 16 J 15/32,
F 16 L 15/00, F 16 L 17/06,
F 16 L 55/10

(54) Abdichtvorrichtung.

(30) Priorität : 22.02.84 DE 3406350

(43) Veröffentlichungstag der Anmeldung :
28.08.85 Patentblatt 85/35

(45) Bekanntmachung des Hinweises auf die Patenterteilung : 23.03.88 Patentblatt 88/12

(84) Benannte Vertragsstaaten :
AT CH DE FR IT LI NL

(56) Entgegenhaltungen :
EP-A- 0 061 752
FR-A- 1 379 852
GB-A- 2 059 532
GB-A- 2 103 744
US-A- 2 246 436
US-A- 2 615 733
US-A- 3 173 712

(73) Patentinhaber : Anton Hummel GmbH Metallwarenfabrik
Mozartstrasse 2 - 5
D-7808 Waldkirch (DE)

(72) Erfinder : Gehring, Peter
Eichhofweg
D-7809 Simonswald-Griesbach (DE)

(74) Vertreter : Schmitt, Hans, Dipl.-Ing. et al
Dreikönigstrasse 13
D-7800 Freiburg (DE)

## Beschreibung

Die Erfindung betrifft eine Abdichtvorrichtung mit einem axialbeaufschlagten, als Profil-, insbesondere 0-Ring ausgebildeten Dichtring aus nachgiebigem Werkstoff, zwischen zwei mittels Gewinde verschraubbaren abzudichtenden Teilen, von denen wenigstens eines zumindest im Dichtbereich einen kreisringförmigen Querschnitt hat, wobei der Dichtring am Ende eines Außengewindes in einer ihn teilweise umschließenden Dichtkammer gehalten ist, die durch das Einschrauben und Festziehen des abzudichtenden Teiles radial nach außen abgeschlossen oder nahezu abgeschlossen wird, und wobei die gegebenenfalls angefaste Stirnseite des anderen Teiles gegen den Dichtring zur Anlage kommt und diesen durch den Anspreßdruck verformt.

Eine vergleichbare Abdichtvorrichtung ist aus der GB-A-2 103 744 bekannt. Der eine Teil ist dabei ein Schraubstutzen, während der andere Teil eine Überwurfmutter zum Festklemmen eines Kabels ist. In Gebrauchsstellung stößt dabei die Überwurfmutter gegen einen als Sechskant ausgebildeten Bund des Schraubstutzen an, so daß ihre eigentliche Stirnseite sich radial oberhalb des in diesem Bereich angeordneten Dichtringes befindet. Die radial innere Fortsetzung dieser Stirnseite der Überwurfmutter bildet dabei den radialen äußeren Abschluß der Kammer, innerhalb welcher der Dichtring gehalten ist. Durch eine schräge Form dieses den Dichtring übergreifenden Bereiches der Überwurfmutter wird der Dichtring zusammengepreßt. Dabei sind aber in der so gebildeten Kammer zur Aufnahme dieses Dichtringes noch Hohlräume frei, so daß nicht sichergestellt ist, ob beim Anstoßen der Überwurfmutter gegen den Bund des Schraubstutzen ein ausreichender Anpreßdruck für eine genügende Dichtigkeit erzeugt wird. Darüber hinaus muß im Laufe der Zeit damit gerechnet werden, daß der Werkstoff des Dichtringes aufgrund des Anpreßdruckes in die verbleibenden Freiräume und Hohlräume ausweicht und somit an Dichtwirkung zumindest teilweise verliert. Eine sichere Abdichtung über lange Jahre ist also nicht gewährleistet.

Eine abgewandelte Abdichtvorrichtung ist aus der US-A-3 173 712 bekannt. Dabei befindet sich der Dichtring in einer Ringnut, die radial außerhalb des Außengewindes angeordnet ist und von der Stirnseite einer Überwurfmutter unter Anpreßdruck gesetzt wird. In verschraubter Position bleibt dabei aufgrund des Widerstandes des Dichtringes ein Spalt frei, der von dem Dichtungswerkstoff verschlossen ist. Dabei kann bei zu festem Anziehen der Gewinde der Dichtwerkstoff in diesen Spalt gequetscht werden, so daß er im Laufe der Jahre aufgrund dieses Druckes allmählich wegfließen kann. Dadurch läßt dann die Dichtwirkung nach. Weicht aber der Dichtring beim Aufschrauben der Überwurfmutter in zunächst freie Räume der Ringnut aus und berührt die Stirnseite der Überwurfmutter das Gegenstück ohne eine Einklemmung von Dichtungswerkstoff, besteht wiederum die Gefahr, daß der Dichtring nicht unter genügend hohem Anpreßdruck für eine sichere Abdichtung steht oder wiederum im Laufe der Jahre in verbleibende Hohlräume der ihn aufnehmenden Kammer ausweichen kann, wodurch der Anpreßdruck und die Dichtwirkung wieder nachlassen. Somit ist auch bei dieser Lösung eine sichere Abdichtung über lange Jahre nicht gewährleistet.

Aus der EP-A-0 061 752 ist eine Abdichtvorrichtung bekannt, bei welcher mit Hilfe des Dichtringes wahlweise sowohl Teile mit etwa rechtwinkliger als auch mit angefaster Kante an der Stirnseite abgedichtet werden können, wobei der Dichtring eine ausreichende Pufferungswirkung für diese unterschiedlichen Ausbildungen der abzudichtenden Kanten ergibt. Dabei ist bei dieser Abdichtvorrichtung wiederum ein Ausweichraum für den Dichtring durch eine Erweiterung des Einstiches in radialer Richtung nach außen gebildet und die axiale Ausdehnung des Ausweichraumes ist kleiner als drei Viertel der in axialer Richtung sich erstreckenden Abmessung des Dichtringes. Bei starkem Druck auf den Dichtring vor allem durch eine rechtwinklige Kante des abzudichtenden Teiles kann sich der Dichtring somit in kontrollierter Weise in den Ausweichraum verformen. Dennoch findet auch eine angefaste Kante aufgrund des relativ großen, aus dem Ausweichraum vorstehenden Bereiches des Dichtringes eine genügend dichte Anlage an demselben Dichtring.

Bei sehr ungünstigen Verhältnissen, z. B. bei einer übergroßen Anfasung des abzudichtenden Teiles, muß der Dichtring aber im Durchmesser so groß gewählt werden, daß bei einer fehlenden Anfasung überschüssiger Werkstoff der Dichtung trotz des Ausweichraumes zum Teil nach außen zwischen die beiden Anlageflächen gedrückt werden kann, wie es auch bei der US-A-3 173 712 vorstehend erwähnt ist. Da bei hohen Temperaturen und hohen Drücken ein solcher aus nachgiebigem Werkstoff bestehender Dichtring auch durch einen sehr kleinen Spalt im Laufe von Monaten oder Jahren davonkriechen kann, besteht in dieser Situation zumindest nach längerer Zeit die Gefahr, daß die Abdichtung mangelhaft wird.

Es besteht deshalb die Aufgabe, eine Abdichtvorrichtung der eingangs erwähnten Art zu schaffen, mit der sowohl stark angefaste als auch gar nicht angefaste, etwa rechtwinklige Kanten eines abzudichtenden Teiles an ein und demselben Dichtring zur Anlage gebracht werden können, dennoch aber auch über lange Jahre die Dichtigkeit erhalten bleibt und die Gefahr eines Kriechens des Dichtungswerkstoffes aus dem Dichtungsbereich und eine Verminderung der Dichtwirkung vermieden werden.

Die Lösung dieser Aufgabe besteht bei der gattungsgemäßen Abdichtvorrichtung darin, daß sie an einem der Teile eine mit dem anderen Teil zusammenwirkende Abquetsch- oder Schneidkante zum Abscheren von durch das Verschrauben der Teile verdrängtem überschüssigem Dichtungwerkstoff hat.

Diese Lösung erlaubt in überraschender und vorteilhafter Weise eine gegenseitige Volumenanpassung von Dichtring und Dichtkammer bei der beim Verschrauben erfolgenden Verformung des Dichtringes, wobei die Dichtkammer verschlossen und dabei überschüssiger Dichtungswerkstoff verdrängt und abgequetscht oder abgeschnitten wird, so daß die Dichtkammer mit Sicherheit unter dem Anpreßdruck geschlossen und völlig gefüllt ist. Das Abschließen der Dichtkammer verhindert ein Wegkriechen, das bestmögliche Auffüllen der Dichtkammer unter Anpreßdruck sorgt für eine gute Dichtigkeit auch über lange Jahre. Dabei ist es besonders vorteilhaft und zweckmäßig, daß beliebig gestaltete abzudichtende Teile gegen den Dichtring verschraubt werden können, wobei stark angefaste Dichtkanten eine genügend große Anlage finden, wenig oder nicht angefaste Dichtkanten eine genügend große Anlage finden, wenig oder nicht angefaste Dichtkanten aber bedenkenlos Dichtungsmasse verdrängen können.

Der abzudichtende Teil wird so fest aufgeschraubt, daß die Dichtkammer verschlossen und dabei radial nach außen verdrängte Dichtungsmasse abgeschert wird. Dadurch ergibt sich in der Dichtkammer genau die richtige Füllung mit Dichtungsmasse, die außerdem unter einem relativ hohen Druck steht und so eine bestmögliche Dichtwirkung erzielt. Dennoch kann auch über Jahre diese Dichtungsmasse aus der Dichtkammer nicht wegkriechen, da ein fester Abschluß der Dichtkammer im Bereich der Abquetsch- oder Schneidkante erzeugt ist.

Eine zweckmäßige Ausführungsform der Erfindung kann darin bestehen, daß die dem Gewinde abgewandte Rückwand der Dichtungskammer mit der Außenseite des sie aufweisenden Teiles, beispielsweise eines Stopfen- oder Ventilkörpers, die Schneid- oder Abquetschkante bildet, die etwa auf dem Außendurchmesser oder je nach Anforderung, zur Vergrößerung der Dichtfläche geringfügig über dem Außendurchmesser des Anschlußgewindes liegt und mit der angefasten Stirnseite oder Dichtkante und/oder Dichtfläche des abzudichtenden Teiles in Schließstellung zusammenwirkt bzw. an dieser anliegt. Beim Einschrauben in das abzudichtende Teil wird so zwischen dessen Stirnseite und der erwähnten Schneid- oder Abquetschkante verdrängter Dichtungswerkstoff abgeschert. Gleichzeitig wird dadurch die Dichtkammer verschlossen, so daß eine weitere Verdrängung von Dichtungsmasse vermieden ist. Gleichzeitig ist aber davon auszugehen, daß die Dichtkammer mit dem verbleibenden Dichtungswerkstoff gut gefüllt ist, der dabei unter Anpreßdruck steht, so daß eine jahrelange Dichtigkeit zu erwarten ist.

Eine andere Möglichkeit besteht darin, daß die Dichtungskammer an ihrer Außenseite ein den Dichtring an seiner radialen Außenseite von der Rückwand der Dichtkammer her so weit übergreifenden Wandungsteil hat und dessen Außendurchmesser im Verhältnis zum Dichtkammerdurchmesser so weit verkleinert ist, daß dessen Stirnseite eine schmale ringförmige Anlagefläche aufweist, welche als Abquetschkante dient. Dadurch ist schon in Ausgangsstellung die Dichtkammer teilweise auch in radialer Richtung abgeschlossen. Wird nun dieses Teil in das abzudichtende Teil eingeschraubt, kann man durch entsprechend festes Anziehen beide Stirnseiten zur Anlage bringen. Dabei wirkt die schmale ringförmige Stirnseite wiederum als Abquetschkante. Diese schmale ringförmige Stirnseite kann auch durch eine Außen- und/oder Innenfase an dem übergreifenden Wandungsteil gebildet werden.

Dabei ist es auch möglich, daß die Stirnseite des den Dichtring außen übergreifenden Wandungsteiles in gleicher Weise als umlaufende Schneide ausgebildet ist. Dadurch kann das Abscheren überschüssigen verdrängten Dichtungswerkstoffes verbessert werden. Wird aber mit einem stark angefasten Gegenstück verschraubt, kann dieses unter Umständen auch ohne Abscheren von Dichtungsmasse die Dichtkammer an der Stirnseite des übergreifenden Wandungsteiles oder einer dort vorgesehenen Schneide verschließen.

Besonders zweckmäßig und vorteilhaft ist es, wenn die den Dichtring außen umgreifende Wandung diesen axial so weit übergreift, daß ihre Schneide oder Abquetschkante, die Dichtkammer abschließend überschüssigen Dichtungswerkstoff abschert. Dadurch wird sichergestellt, daß mit dem Abschließen der Dichtkammer auch der überschüssige Dichtungswerkstoff abgeschert wird, so daß der Abschluß der Dichtkammer voll wirksam ist. Gegebenenfalls kann dabei sogar eine gewisse Stauchung der Schneidkante durchgeführt werden, so daß ein Kriechen von Dichtungswerkstoff aus dieser Dichtkammer heraus unmöglich ist. Dabei kann die Schneide entsprechend spitzwinklig ausgebildet sein, um einerseits gut zu schneiden und andererseits beim Auflaufen des Gegenstückes gegebenenfalls gestaucht oder verformt zu werden, um den Abschluß der Dichtkammer sicherzustellen.

Der außenseitige Wandungsteil kann unterschiedlich gestaltet sein. Beispielsweise kann die Außen- und/oder Innenseite des den Dichtring außen umgreifenden Wandungsteiles zur Bildung einer Schneide von außen nach innen oder von innen nach außen abgeschrägt sein. Dadurch lassen sich in unterschiedlicher Weise auch Nachgiebigkeiten und endgültige Querschnittsform der Dichtkammer steuern. Eine von außen nach innen abgeschrägte Schneide wird früher wirksam werden und mehr Dichtungsmasse abscheren als eine von innen nach außen abgeschrägte Schneide, die eine gewisse radiale Nachgiebigkeit des Wandungsteiles bewirkt.

Eine andere oder zusätzliche Möglichkeit der Anpassung der Dichtung und der Dichtkammer an unterschiedliche Dichtflächen oder Dichtkanten besteht darin, daß hinter der Rückwand der Abdichtkammer ein freier Raum, insbesondere ein Einstich ist und die Rückwand federnd nachgiebig ausgebildet ist. Auch dadurch kann eine Vergrößerung der Pufferungswirkung des Dichtringes erzielt werden. Dabei kann die Rückwand der Kammer mindestens bereichsweise schräg von innen nach außen zu der Abquetsch- oder Schneidkante und/oder dem den Dichtring außen umgreifenden Wandungsteil vom Gewinde wegführend ansteigen. Dies hat die zusätzliche Wirkung, daß vor allem ein etwas kleinerer Dichtring durch das Aufschrauben des abzudichtenden Teiles an dieser schrägen Wandung verschoben und dadurch radial nach außen gedehnt wird, wodurch seine Anlage an dieser schrägen Kante durch seine Eigenspannung verbessert wird. Zusätzlich treten dann die schon geschilderten Wirkungen beim Verdrängen weiterer Dichtungsmasse auf. In gleicher Weise kann die Rückwand der Kammer von innen nach außen, jedoch zum Gewinde hinführend ansteigen. Dies hat zur Folge, daß der Dichtring zuerst nach innen ausweichend die Dichtkammer vollständig ausfüllt, wonach dann erst der wirklich überflüssige Dichtungswerkstoff ausgepreßt und abgeschnitten wird.

Eine weitere Ausgestaltung der Erfindung, die für sich alleine oder in Kombination mit den vorbeschriebenen Maßnahmen möglich ist, kann darin bestehen, daß die den Dichtring außen umgreifende Wandung im Verhältnis zur Wandungslänge so dimensioniert wird, daß sie beim Festziehen nachgiebig, insbesondere stauchbar ist. Dies führt dazu, daß beim Anziehen des abzudichtenden Teiles in jedem Fall ein äußerer Abschluß erzielt werden kann unabhängig davon, ob eine wenig oder nicht angefaste Kante vorgesehen ist, bei der schon nach relativ kurzer Zeit der Dichtring unter erheblicher Verpressung steht, oder ob eine stark angefaste Dichtungskante vorgesehen ist, die eine weitere Verschraubung in axieler Richtung wünschenswert macht, um einen genügenden Anpreßdruck zwischen Dichtring und abzudichtender Kante herzustellen. Im letzteren Fall kann dann diese weitere Verschraubung durchgeführt werden, weil der radial äußere Abschluß der Dichtkammer entsprechend nachgibt. Dieses Nachgeben kann durch eine gezielte Formgebung der Außenwandung gesteuert werden.

Beispielsweise kann die den Dichtring außen umgreifende Wandung Schwächungen, Nuten, wenigstens eine nach innen oder eine nach außen gerichtete Wölbung od. dgl. die axiale Nachgiebigkeit und Stauchbarkeit fördernde Verformung aufweisen. Ferner kann die den Dichtring umfassende Wandung in Ausgangsstellung in ihrem Querschnitt schräg nach außen oder etwa parallel zur Mittelachse und/oder mit ihrer Stirnseite schräg nach außen gerichtet sein, wodurch auch in radialer Richtung die Verformung der umfassenden Wandung gezielt erfolgen kann. Die dadurch vorgegebene Stauchung der umfassenden Wandung nach außen ergibt eine zusätzliche Vergrößerung der Dichtfläche in radialer Richtung nach außen.

Es sei noch erwähnt, daß von zwei parallele äußere Wandungen zumindest eine den Dichtring in Ausgangsstellung ganz oder teilweise übergreifen kann und vorzugsweise eine die Dichtkammer begrenzende Abquetschkante oder Schneide hat und deren andere in Gebrauchsstellung die Dichtkammerwand nach außen als Sichtblende verdeckt. Dadurch ist es möglich, mit einem stark angefasten abzudichtenden Teil eine sichere Abdichtung und gleichzeitig einen guten Abschluß nach außen zu erzielen, mit einem nicht angefasten abzudichtenden Teil aber verdrängten Dichtungswerkstoff mittels der Schneide abzuschneiden und die Abdichtkammer sicher nach außen zu verschließen.

Bei einer Ausführungsform, bei der hinter der Rückwand der Dichtkammer eine Ausnehmung vorgesehen ist, ist es zweckmäßig, wenn an deren Oberseite ein ringförmiger, über diese Ausnehmung ragender Steg vorgesehen ist. Gibt die Rückwand etwas den Dichtungsdruck nach, wird der hinter ihr befindliche Einstich von diesem Steg verschlossen.

Insgesamt ergibt sich bei Kombination der vorbeschriebenen Merkmale und Maßnahmen eine Abdichtvorrichtung, die sowohl nicht angefaste als auch stark angefaste Dichtkanten von abzudichtenden Teilen verkraftet und dennoch bei beliebigen Anwendungen eine gute Abdichtung auch über Jahre gestattet, ohne daß bei Wärme- und Druckschwankungen die Gefahr besteht, daß Teile des Dichtungsringes wegkriechen. Dies wird durch mehrere einzeln oder kombiniert anwendbare Maßnahmen verhindert, die zu einem radial äußeren Abschluß der den Dichtring enthaltenden Dichtkammer führen.

Nachstehend ist die Erfindung mit ihren ihr als wesentlich zugehörenden Einzelheiten anhand der Zeichnung in zahlreichen Ausführungsbeispielen noch näher beschrieben. Es zeigt in zum Teil schematisierter Darstellung und jeweils in einem Schnitt durch die Dichtkammer:

Fig. 1 und Fig. 2 zwei unterschiedlich dimensionierte Ausführungsbeispiele eines Stopfens mit Dichtkammer und Abquetschkante an deren dem Außengewinde abgewandten Rand,

Fig. 3 ein Ventilgehäuse, bei welchem die Dichtkammer an der Außenseite einen den Dichtring teilweise übergreifenden Wandungsteil mit einer Schneidkante hat,

Fig. 3a bis 3g verschiedene Abwandlungen und Varianten der Ausführungsform nach Fig. 3,

Fig. 4 eine Abdichtkammer mit einer den Dichtring radial außen übergreifenden Wandung, die in axialer Richtung stauchbar ist,

Fig. 4a bis 4k verschiedene Ausgestaltungen und Abwandlungen der Ausführungsform nach Fig. 4,

Fig. 5 eine Dichtkammer, deren Rückwand federnd nachgiebig ist,

Fig. 5a, 5b, 5c Abwandlungen der Ausführungsform nach Fig. 5,

Fig. 6 eine Dichtkammer, bei welcher die Rückwand federnd nachgiebig und ein den Dichtring radial außen umgreifender Wandungsteil verformbar und stauchbar ist,

Fig. 6a bis 6f Varianten und Abwandlungen der Ausführungsform nach Fig. 6,

Fig. 7 eine Dichtkammer, bei welcher an einer stauchbaren äußeren Wandung eine Schneidkante vorgesehen ist,

Fig. 7a bis 7f Abwandlungen der Ausführungsform nach Fig. 7,

Fig. 8 eine Dichtkammer bei welcher eine äußere Wandung eine Schneidkante hat und die Kammer in ihrem Inneren schräg von innen nach außen ansteigt,

Fig. 9 eine Dichtkammer, deren Rückwand federnd nachgiebig ist und die außerdem radial außen eine Schneidkante hat,

Fig. 9a und 9b Abwandlungen und Ausgestaltungen der Ausführungsform nach Fig. 9,

Fig. 10 eine Dichtkammer, deren Rückwand federnd nachgiebig ist, die eine den Dichtring an seiner radialen Außenseite übergreifende Wandung hat, welche gleichzeitig stauchbar ist und stirnseitig eine Schneide hat,

Fig. 10a und 10b Abwandlungen der Ausführungsform nach Fig. 10,

Fig. 11, 11a bis 11d Ausführungsformen, bei denen ein Teil der Dichtkammer als separater Dichtkammerteil ausgebildet ist, sowie

Fig. 12, 12a bis 12c eine Ausführungsform, bei welcher die äußere Wandung mit Schlitzen und/oder Nuten versehen ist.

Bei allen Ausführungsbeispielen sind einander entsprechende Teile selbst bei verschiedenartiger Gestaltung jeweils mit derselben Bezugsziffer versehen. Dabei werden bei einzelnen Figuren nur die Unterschiede gegenüber schon beschriebenen Ausführungsbeispielen erwähnt und nicht jede Figur insgesamt bis ins einzelne erläutert.

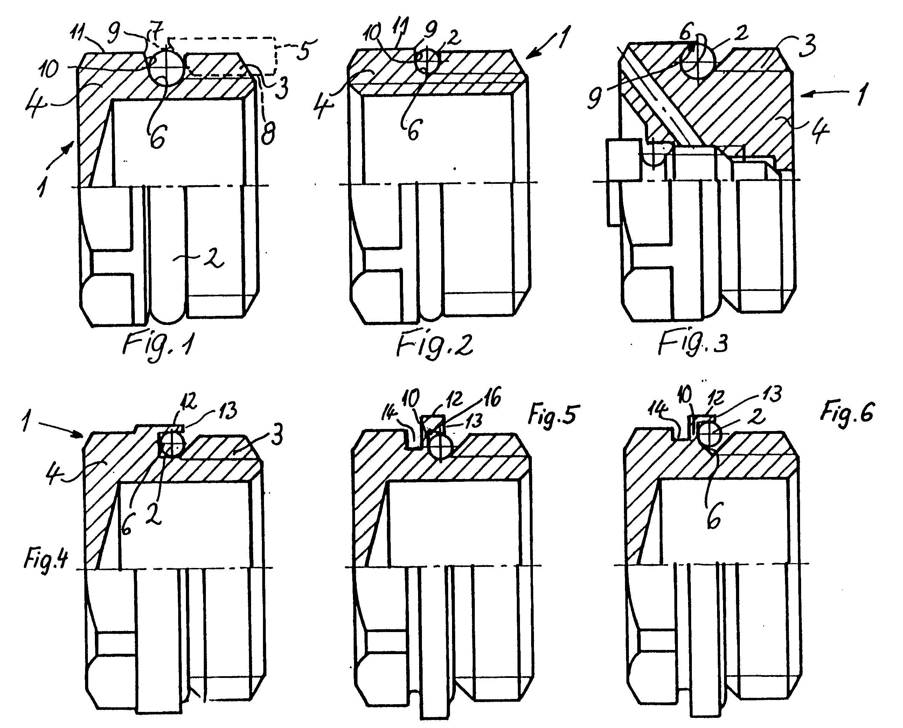

Bei allen Ausführungsbeispielen handelt es sich um eine Abdichtvorrichtung 1 mit einem axial beaufschlagten, in allen Ausführungsbeispielen als O-Ring ausgebildeten Dichtring 2 zwischen zwei mittels Gewinden 3 verschraubbaren abzudichtenden Teilen. Dabei ist der eine Teil 4 beispielsweise ein Stopfen, wie es bei praktisch allen Figuren vorgesehen ist, während Fig. 3 andeutet, daß auch ein Ventilkörper diesen Teil 4 der Vorrichtung bilden kann. Es können aber auch Rohrkupplungen oder beliebig andere verschraubbare abzudichtende Teile den Teil 4 einer solchen Abdichtvorrichtung bilden. Im folgenden wird dieser Teil 4 gelegentlich auch als Stopfen 4 bezeichnet.

Der abzudichtende Teil 5, der mit dem Teil 4 verschraubbar ist, ist lediglich in Fig. 1 gestrichelt angedeutet und kann an seinem Gewindeanfang scharfkantig oder mehr oder weniger stark angefast sein. Er kann aber auch eine beliebige andere Form haben (z. B. Radiatoren oder andere Heizkörper), bei der lediglich der Dichtungsbereich um das Gewinde glattflächig oder stutzenförmig ausgebildet ist. Zumindest hat dieser abzudichtende Teil 5 im Dichtbereich ein passendes Gewinde. Der Dichtring 2 befindet sich jeweils in einem ihn teilweise umschließenden Einstich bzw. einer Dichtkammer 6 am Ende des Außengewindes 3 des Teiles 4. Die Stirnseite 7 des abzudichtenden Teiles 5 bzw. die am Übergang zwischen der stirnseite 7 und der Innenhöhlung 8 dieses Teiles 5 befindliche Dichtkante und/oder Dichtfläche kommt in Gebrauchsstellung gegen den Dichtring 2 zur Anlage und verformt diesen durch die Anpressung, die beim Aufschrauben und Festziehen an dem Gewinde 3 innerhalb des Dichtringwerkstoffes entsteht.

Bei allen Ausführungsbeispielen ist dafür Sorge zu tragen, daß in Abdichtstellung die Dichtkammer 6 radial nach außen abgeschlossen oder wenigstens nahezu abgeschlossen ist. Dadurch kann erreicht werden, daß später bei Wärmeoder Druckeinwirkungen kein Werkstoff des Dichtringes 2 nach außen wegkriechen kann, der dann für die volle Abdichtwirkung fehlt und also auf die Dauer zu einer Undichtigkeit führen kann. Dabei ist die Dichtkammer 6 durch das Verschrauben und Festziehen mit dem abzudichtenden Teil 5 verschließbar. Im einzelnen kann dies dadurch erreicht werden, daß die Abdichtvorrichtung 1 eine mit dem abzudichtenden Teil 5 zusammenwirkende Abquetsch- oder Schneidkante 9 zum Abscheren von durch das abzudichtende Teil 5 verdrängten überschüssigem Dichtungswerkstoff hat, wie es insbesondere in den Fig. 1, 2 aber in gewissem Umfang auch Fig. 3, 7 oder 10 und weiteren in der Figurenaufzählung genannten Figuren der Fall ist. Auch kann wenigstens ein nachgiebiger Wandbereich an der Dichtkammer 6 zur Verkleinerung von deren Innenvolumen zur sicheren dichten Verpressung des Dichtungswerkstoffes des Dichtringes 5 vorgesehen sein. Im einzelnen ist bei den verschiedenen Ausführungsformen folgendes vorgesehen :

In den Fig. 1 und 2 bildet die dem Gewinde 3 abgewandte Rückwand 10 der Dichtungskammer 6 mit der Außenfläche 11 des sie aufweisenden Teiles 4 die Abquetschkante 9, die etwa auf dem Außendurchmesser oder je nach Anforderung, zur Vergrößerung der Dichtfläche geringfügig über dem Außendurchmesser des Außengewindes 3 liegt und mit der angefasten Stirnseite 7 des abzudichtenden Teiles 5 in Schließstellung zusammenwirkt. Dabei erkennt man in Fig. 1, daß die Rückwand 10 etwas schräg verläuft, so daß die Abquetschkante 9 in ihrem Querschnitt stumpfwinklig ist. In Fig. 2 hingegen verläuft die Rückwand 10 genau rechtwinklig zur Außenseite 11, so daß der Querschnitt der Abquetschkante 9 rechtwinklig ist. In beiden Fällen ist der Außendurchmesser der Außenseite 11 so weit größer als der des Gewindebereiches 3, wie es zu einer sicheren Abdichtung des Gewindeaußendurchmessers notwendig ist.

Durch das Verschrauben und Anziehen mit dem Teil 5 gelangt dessen Stirnseite 7 schließlich zur Anlage an der Kante 9, wobei überschüssiger, verdrängter Werkstoff dann abgeschert wird, vor allem aber die Dichtkammer 6 verschlossen wird.

Bei praktisch allen übrigen Ausführungsbeispielen hat die Dichtkammer 6 an ihrer Außenseite einen den Dichtring 2 an seiner radialen Außenseite von der Rückwand 10 der Dichtkammer 6 her übergreifenden Wandungsteil 12, dessen Stirnseite 13 dem Außengewinde 3 bzw. dem abzudichtenden Teil 5 zugewandt ist.

In den Fig. 3 und 3a bis 3g ist die Stirnseite des den Dichtring 2 außen übergreifenden Wandungsteil 12 als umlaufende Schneide 9 ausgebildet. Es ergibt sich somit in Fortentwicklung der Ausführungsformen nach Fig. 1 und 2 eine schon in Ausgangsstellung teilweise auch nach außen abgeschlossene Dichtkammer 6, bei der dennoch überschüssiger, nach außen verdrängter Dichtungswerkstoff durch das Festschrauben an das abzudichtende Teil 5 abgeschert werden kann. Dabei erlaubt diese Ausführungsform eine größere Variationsbreite bei der Form der Dichtkante oder Dichtfläche dieses abzudichtenden Teiles 5. Die einzelnen Fig. 3, 3a bis 3g zeigen unterschiedliche Formen der Ausgangslage in der Dichtkammer 6, wodurch mehr oder weniger Innenvolumen in dieser Dichtkammer zur Verfügung steht und mehr oder weniger früh deren Abschluß nach außen erreicht wird.

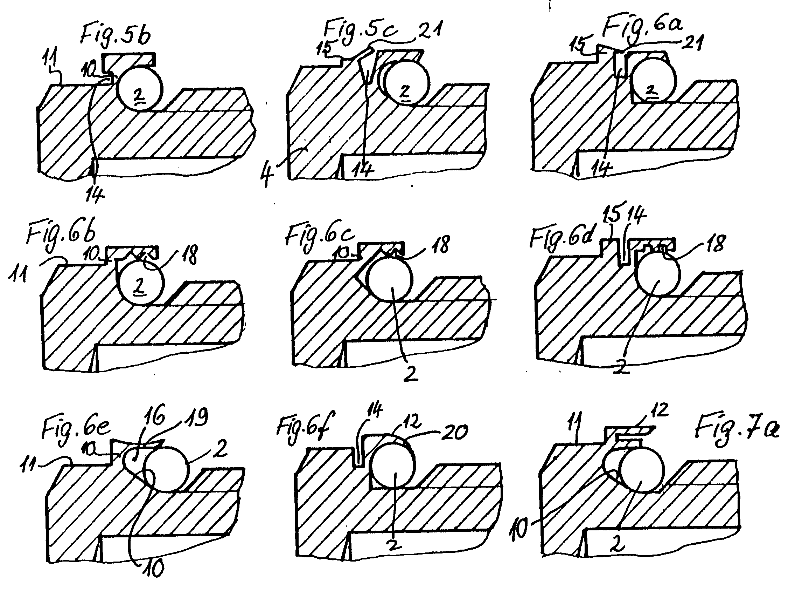

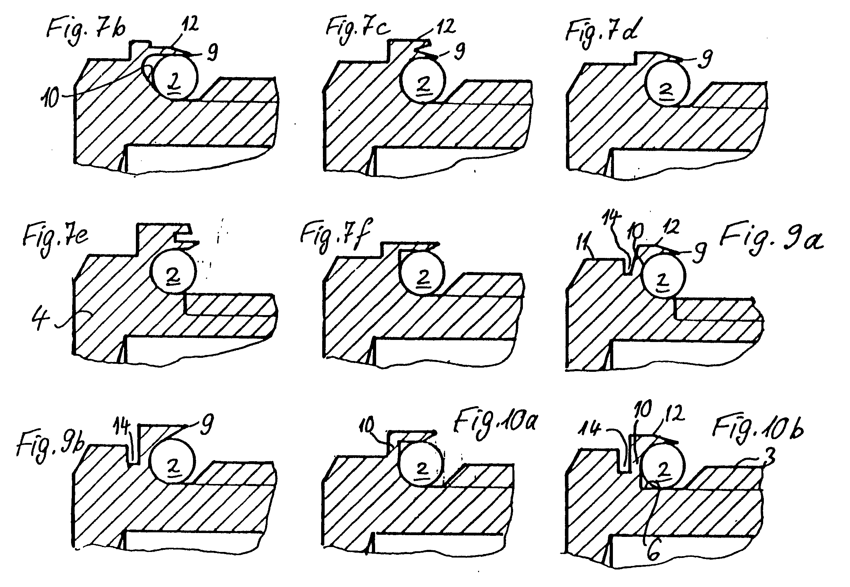

Sowohl in diesen Ausführungsbeispielen als auch in noch zu beschreibenden Ausführungsbeispielen beispielsweise gemäß Fig. 7 und 8 mit deren Varianten ist dargestellt, daß die Außen- und/oder Innenweite des den Dichtring 2 außen umgreifenden Wandungsteiles 12 zur Bildung der Schneidkante 9 entweder von außen nach innen oder von innen nach außen oder aber sowohl von außen nach innen als auch von innen nach außen abgeschrägt sein kann. Eine Abschrägung des Wandungsteiles 12 von innen nach außen zeigt beispielsweise Fig. 7, eine Abschrägung nur von außen nach innen Fig. 8. Eine Abschrägung von beiden Seiten her erkennt man beispielsweise in Fig. 3e oder auch 3g. Je nach Abschrägungsrichtung kann das Wirksamwerden der Schneide 9 früher oder später erfolgen. Beispielsweise wird bei einer Abschrägung der Stirnseite von außen nach innen etwa gemäß Fig. 8 oder 7b oder auch gemäß Fig. 6f zu einem früheren Zeitpunkt bereits nach außen verdrängter Dichtungswerkstoff abgeschert werden. Ein etwas späteres Abscheren oder Abquetschen erfolgt, wenn die Schneide 9 durch eine Abschrägung von innen nach außen entsprechend Fig. 7 oder 7f oder auch 7e gebildet ist.

Es wurde schon erwähnt, daß eine Möglichkeit der anpaßbaren Ausbildung der Dichtkammer 6 darin besteht, einen Wandungsbereich nachgiebig zu machen. Die Fig. 5 und 6 sowie die Variationen dazu gemäß den Fig. 5a bis 5c und 6a bis 6f zeigen Abdichtvorrichtungen 1, bei denen hinter der Rückwand 10 der Dichtkammer 6 ein freier Raum, insbesondere ein Einstich 14 angeordnet ist, wobei die Rückwand 10 federnd nachgiebig ausgebildet ist. Bei einer schwächeren Verdrängung von Dichtungswerkstoff des Dichtringes 2 kann somit die Rückwand 10 in axialer Richtung ausweichen und das Innenvolumen der Dichtkammer 6 verringern. Bei den Fig. 6b und 6c oder auch 6e sitzt der nachgiebige Teil der Rückwand 10 einfach oberhalb der Außenfläche 11. Dies gilt auch für die Ausführungsform beispielsweise nach Fig. 5b. Dadurch kann ein radialer Einstich 14 vermieden werden. Soll jedoch die radiale Ausdehnung der Abdichtvorrichtung 1 möglichst klein gehalten werden, wird ein Einstich gemäß den Fig. 5 oder 6 oder auch 5c oder 6a zweckmäßig sein. Darüber hinaus kann mit Hilfe eines solchen Einstiches 14 der Ausweichweg der Rückwand 10 begrenzt werden, so daß selbst in einem Fall, bei dem gemäß Fig. 6d die nachgiebige Rückwand 10 weitestgehend außerhalb der Außenfläche 11 angeordnet ist, dann dennoch ein Einstich 14 und ein dahinter liegender Bund 15 für eine solche Begrenzung der Verformungsmöglichkeit der Rückwand 10 zweckmäßig sein.

In mehreren Ausführungsbeispielen, beispielsweise in den Fig. 4b, 4c, 4f, 4i, 6e, 7a und 7b sowie auch Fig. 8 ist vorgesehen, daß die Rückwand 10 der Dichtkammer 6 mindestens bereichsweise schräg von innen nach außen zu der Schneid- oder Abquetschkante 9 und/oder dem den Dichtring 2 außen umgreifenden Wandungsteil 12 vom Gewinde wegführend ansteigt. Dadurch entsteht ähnlich wie bei anderen Ausführungsbeispielen, beispielsweise Fig. 5 oder 4g ein Ausweichraum 16 für verdrängte Dichtungsmasse, so daß diese im Ausweichraum 16 befindliche Dichtungsmasse nicht radial nach außen austritt und abgeschert werden muß, da sich dieser Ausweichraum 16 zwischen der Rückwand 10 und dem äußeren Wandungsteil 12 befindet. Ferner kann dadurch der Dichtring 2 zu einer festeren Anlage an dieser Rückwand 10 gebracht werden, was die Dichtwirkung erhöht. Wird aufgrund einer entsprechend geformten Dichtkante an dem abzudichtenden Teil 5 weiterer Dichtungswerkstoff verdrängt, wird dieser an der Schneid- und Abquetschkante 9 abgeschert werden, bevor die Dichtkammer 6 vollständig abgeschlossen wird. In gleicher Weise kann die Rückwand 10 der Dichtkammer 6 von innen nach außen, jedoch zum Gewinde 3 hinführend ansteigend ausgebildet werden. Dadurch wird der Dichtring 2 zuerst die Dichtkammer 6 voll ausfüllend nach innen gedrückt und nur der wirklich überflüssige Dichtungswerkstoff, welcher erst ganz zum Schluß der Verpressung nach außen austritt, wird durch die Abquetsch- oder Schneidkante 9 abgeschert.

Eine weitere Möglichkeit, die zusätzlich oder statt der vorerwähnten Maßnahmen ergriffen werden kann, um einen Wandungsbereich zur Anpassung an unterschiedliche Verdrängungen von Dichtungsmasse anzupassen, sieht vor, daß die den Dichtring 2 außen umgreifende Wandung 12 nachgiebig, insbesondere stauchbar ist. Dies ist z. B. bei einer Lösung gemäß Fig. 4 und 6 oder 6a bis 6f oder 4i und 4k vorgesehen. Dabei erkennt man in diesen Ausführungsbeispielen, daß die den Dichtring 2 außen umgreifende Wandung 12 im Verhältnis zur Wandungslänge schwach dimensioniert ist und/oder Schwächungen 17 durch Innen- oder Außeneinstiche, Nuten 18 oder Schlitze 24 und 25, wenigstens eine nach innen gerichtete Wölbung 19 oder eine nach außen gerichtete Wölbung 20 od. dgl. die axiale Nachgiebigkeit und Stauchbarkeit fördernde Verformung aufweisen kann. Dabei zeigen die Fig. 6a, 6b und 6f, daß zusätzlich auch die Rückwand 10 nachgiebig sein kann. Je nach Dichtungswerkstoff, Form und Größe des Dichtringes 2 oder auch Form und Größe des abzudichtenden Teiles 5 kann eine oder mehrere der vorbeschriebenen Maßnahmen ergriffen werden, um die Pufferungsmöglichkeit im Dichtungsbereich zu wählen und zu steuern und sicherzustellen, daß im Laufe der Jahre kein Werkstoff aus dem Dichtungsbereich wegkriechen kann.

Die Nachgiebigkeit der äußeren Wandung 12 kann gegebenenfalls auch dadurch beeinflußt sein, daß sie entweder in ihrem Querschnitt schräg nach außen oder etwa parallel zur Mittelachse und/oder mit ihrer Stirnseite 13 schräg nach außen gerichtet ist. Dabei kann wiederum die Verformung der umfassenden Wand gezielt nach außen erfolgen, wobei sich eine zusätzliche Vergrößerung der Dichtfläche in radialer Richtung nach außen ergibt.

In einzelnen Ausführungsbeispielen, beispielsweise den Fig. 4e, 4a, 7a, 7c oder 7e ist dargestellt, daß von zwei parallelen äußeren Wandungen 12 eine den Dichtring 6 in Ausgangsstellung ganz oder teilweise übergreifen und eine Abquetschkante oder Schneide 9 haben kann, welche die Dichtkammer 6 nach außen begrenzt und deren andere in Gebrauchsstellung die Dichtkammerwand 6 nach außen als Sichtblende verdeckt.

In den Ausführungsbeispielen nach Fig. 5c und 6a erkennt man noch, daß an der Oberseite der hinter der Rückwand 10 der Dichtkammer 6 befindlichen Ausnehmung 14 ein ringförmiger, über diese Ausnehmung 14 ragender Steg 21 vorgesehen sein kann, der vor allem nach einem Nachgeben der Rückwand 10 durch das Verdrängen von Dichtungsmasse diese Ausnehmung bzw. diesen Einstich 14 abschließt.

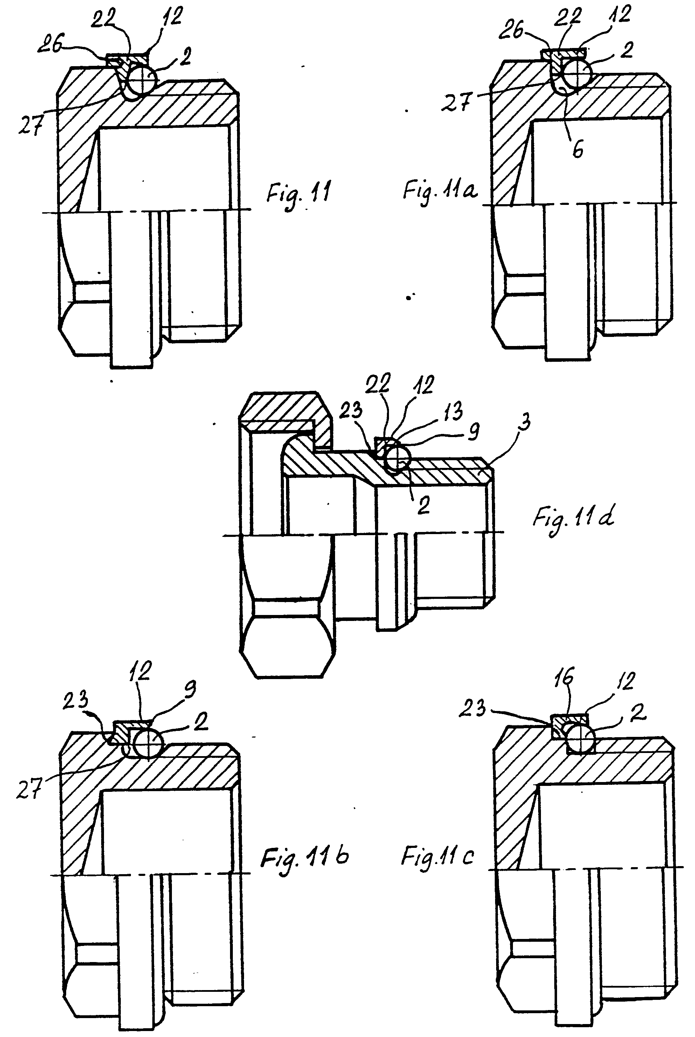

Anhand der zahlreichen Ausführungsvarianten ist gleichzeitig erkennbar, daß die einzelnen Maßnahmen und Möglichkeiten zum äußeren Abschluß der Dichtkammer 6 sowohl einzeln als auch in beliebiger Weise kombiniert vorgesehen sein können. Dabei können entweder auch zwei oder drei oder alle Maßnahmen kombiniert sein. So zeigt Fig. 10 die Möglichkeit einer nachgiebigen Rückwand 10, einer stauchbaren äußeren Wandung 12 und einer Schneidkante 9. Dabei könnte diese äußere Wandung 12 auch noch Verformungen 17 oder 18 oder 19 oder 20 haben.

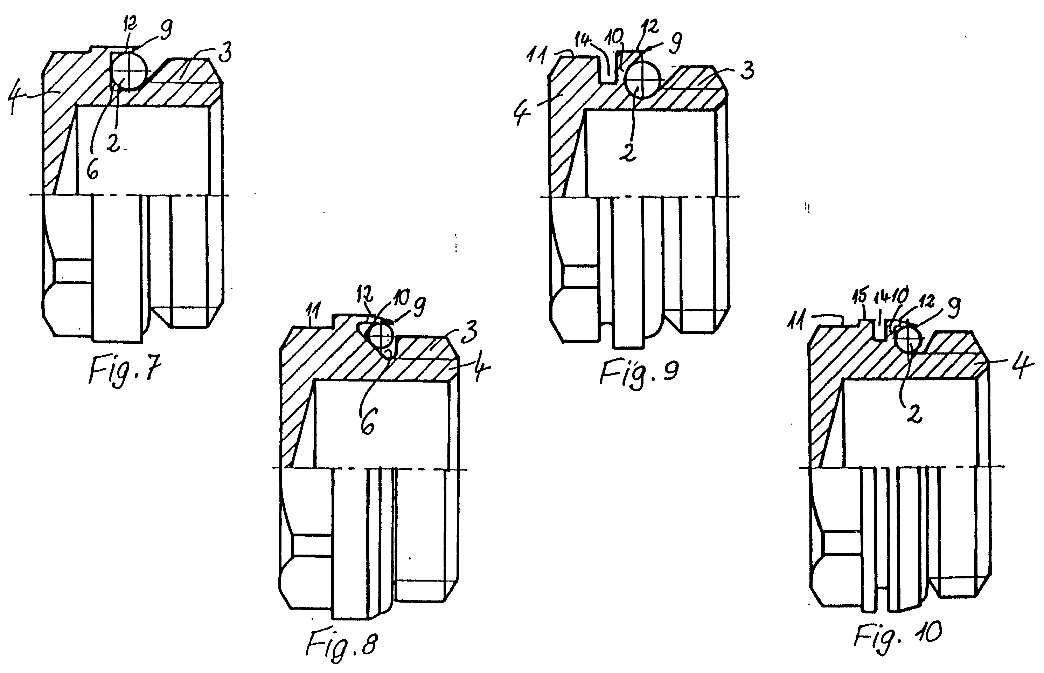

Ferner sei erwähnt, daß eine derartig gestaltete Dichtkammer 6 in der einen oder anderen Ausführungsform auch an einem Teil 4 doppelt vorgesehen sein kann, wenn dieses beidseitig Gewinde 3 zum Anschließen zweier aufeinanderstoßender Rohrstutzen od. dgl. abzudichtender Teile 5 hat. Schließlich können in all diesen Fällen zusätzlich Ausweichräume 16 vorgesehen sein, um die Pufferungsmöglichkeit im Bereich des Dichtringes 2 weiter zu vergrößern. Dabei ist vorteilhaft, daß all diese Maßnahmen relativ einfach und preiswert durchführbar sind, wobei die einfachste Variante eine etwa gemäß Fig. 2 darstellt, aber auch die übrigen Varianten keinen wesentlichen Mehraufwand mit sich bringen. Auch der Werkstoff der zusammenwirkenden Teile 4 und 5 kann in vorteilhafter Weise bei diesen verschiedenen Lösungsmöglichkeiten unterschiedlich sein. So können beide Teile aus Metall oder aber auch eines der beiden Teile aus Kunststoff und das andere Teil aus Metall oder schließlich beide Teile aus Kunststoff bestehen. Vor allem eine Fertigung des die Dichtkammer 6 aufweisenden Teiles 4 aus Kunststoff erlaubt dabei eine große Variationsbreite bezüglich der Ausbildung der Rückwand 10 und der äußeren Wandung 12, wobei eine Dichtkammeranordnung außerhalb des Gewindes zu bevorzugen ist (Fig. 7e und 9a).

In den Fig. 11, 11a, 11b, 11c und 11d ist eine Abdichtvorrichtung dargestellt, bei welcher die Dichtkammer 6 wenigstens teilweise, zumindest ihr äußerer Wandungsteil 12 gegebenenfalls mit der Rückwand 10 oder — wie im Ausführungsbeispiel — mit einem Teil der Rückwand 10 als separates Dichtkammerteil 22, insbesondere als an dem einen abzudichtenden Teil 4 anbringbarer Ring ausgebildet ist. Dabei paßt das Dichtkammerteil 22 auf das abzudichtende Teil 4 einer Armatur od. dgl., wobei der Anschlag für das Dichtkammerteil als Ausdrehung am Dichtkammerteil 22 selbst oder am abzudichtenden Teil 4 angebracht sein kann. Fig. 11d zeigt z. B. eine Rohrverschraubung mit einer derartig ausgebildeten zweiteiligen Dichtkammer 6, wobei an der Stirnseite des Wandungsteiles 12 die Schneidkante 9 vorgesehen ist. Die Wandungsteile 12 können aber gemäß den übrigen Fig. 11 bis 11c auch beliebige andere Formen gemäß den zuvor beschriebenen Ausführungsbeispielen haben. Es ergibt sich durch diese Ausführungsform einer zweiteiligen Dichtkammer 6 die Möglichkeit, aus einem offenen Dichtraum eine geschlossene Dichtkammer 6 zu machen, welche je nach Anforderung für verschieden große Dichtringe 2 mit unterschiedlichen Änderungsmöglichkeiten des Dichtkammervolumens bzw. des Dichtringes versehen sein kann, wobei wiederum verschiedene Kombinationen der Volumenanpaßbarkeit an das Gegenstück 5 möglich sind.

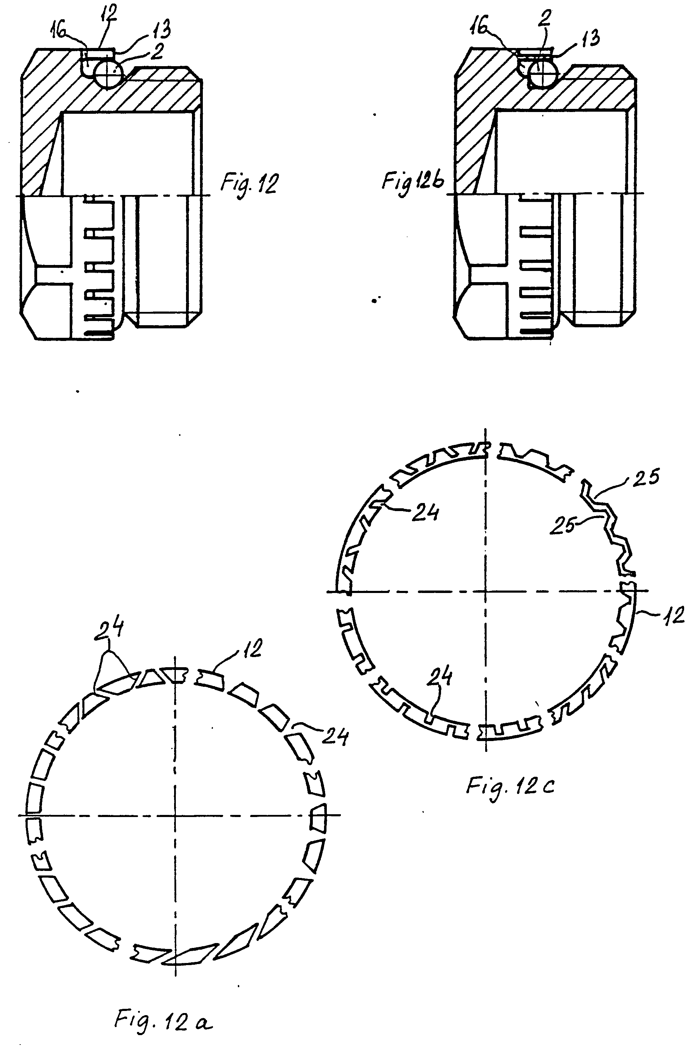

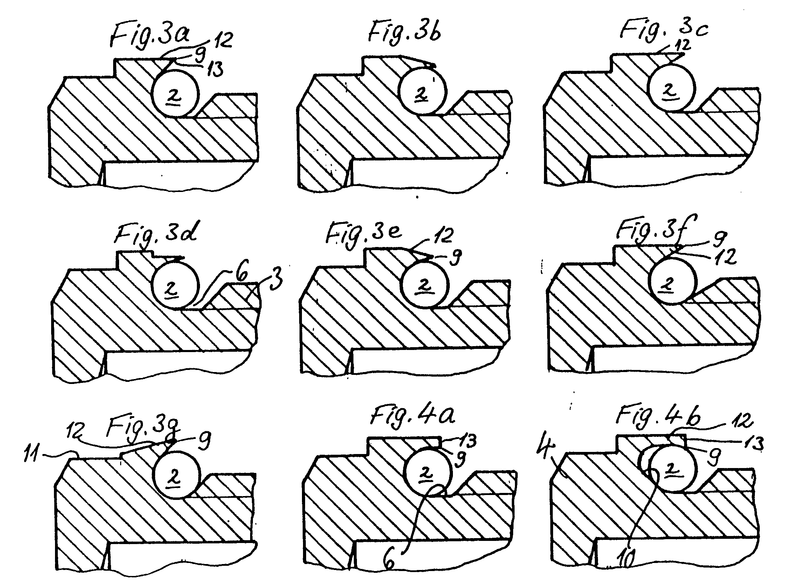

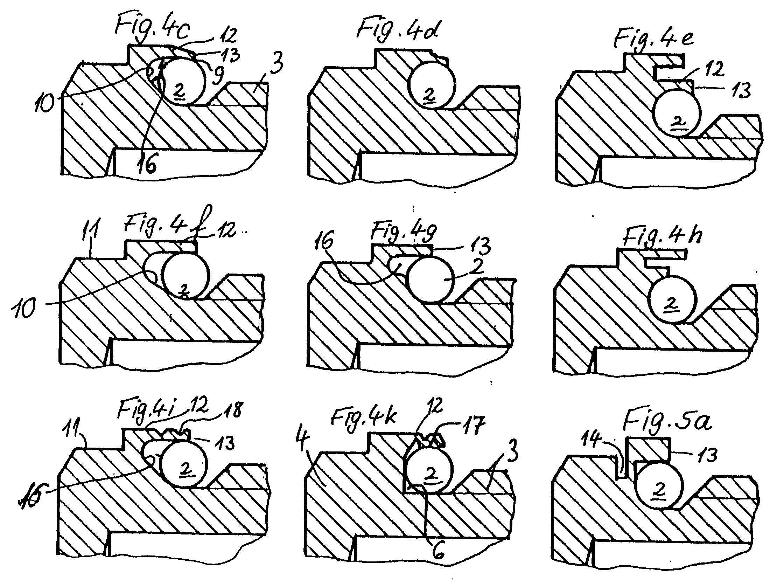

Fig. 12 zeigt einen Querschnitt durch eine Dichtkammer und Fig. 12a eine mit mehreren Ausführungsformen versehene Stirnansicht der äußeren Wandung 12 aus der Ausführungsform gemäß Fig. 12, während Fig. 12b wiederum einen Querschnitt der Dichtkammer und Fig. 12c eine Stirnansicht der äußeren Wandung 12 der in Fig. 12b dargestellten Ausführungsform zeigt. Dabei erkennt man, daß die äußere Wandung 12 sich in axialer Richtung erstreckende Schlitze 24, Nuten 25 od. dgl. Ausnehmungen unterschiedlicher Querschnittsformen haben kann. Die Fig. 12a und 12c zeigen, daß die Schlitze 24 oder Nuten 25 die äußere Wandung 12 ganz oder nur teilweise durchsetzen können und ihr Querschnitt von parallelen, radial oder schräglaufenden und/oder schräg zueinander angeordneten Wänden begrenzt sein können, so daß die dargestellten unterschiedlichen Schlitzformen oder Nutenanordnungen entstehen. Die nicht durch die gesamte Wandung 12 durchgehenden Schlitze gemäß Fig. 12c können von außen nach innen oder von innen nach außen oder abwechselnd von innen nach außen und außen nach innen gerichtet sein. Dabei sind wiederum schräge oder radiale Anordnungen und außerdem auch Nuten mit abgewandelten Querschnitten dargestellt, um unterschiedliche Anpaßmöglichkeiten und Ausgestaltungen anzudeuten, die die äußere Wandung 12 nachgiebig machen.

**Patentansprüche**

1. Abdichtvorrichtung (1) mit einem axial beaufschlagten, als Profil-, insbesondere O-Ring ausgebildeten Dichtring (2) aus nachgiebigem Werkstoff, zwischen zwei mittels Gewinde (3) verschraubbaren abzudichtenden Teilen (4, 5), von denen wenigstens eines zumindest im Dichtbereich einen kreisringförmigen Querschnitt hat, wobei der Dichtring (2) am Ende eines Außengewindes (3) in einer ihn teilweise umschließenden Dichtkammer (6) gehalten ist, die durch das Einschrauben und Festziehen des abzudichtenden Teiles radial nach außen abgeschlossen oder nahezu abgeschlossen wird, und wobei die gegebenenfalls angefaste Stirnseite (7) des anderen Teiles gegen den Dichtring (2) zur Anlage kommt und diesen durch den Anpreßdruck verformt, dadurch gekennzeichnet, daß sie an einem der Teile (4, 5) eine mit dem anderen Teil (5, 4) zusammenwirkende Abquetsch- oder Schneidkante (9) zum Abscheren von durch das Verschrauben der Teile (4, 5) verdrängtem überschüssigem Dichtungswerkstoff hat.

2. Abdichtvorrichtung nach Anspruch 1, dadurch gekennzeichnet, daß die dem Gewinde abgewandte Rückwand (10) der Dichtungskammer (6) mit der Außenseite (11) des sie aufweisenden Teiles (4), beispielsweise eines Stopfen- oder Ventilkörpers, die Abquetsch- oder Schneidkante (9) bildet, die etwa auf dem Außendurchmesser oder je nach Anforderung, zur Vergrößerung der Dichtfläche geringfügig über den Außendurchmesser des Anschlußgewindes (3) liegend je nach Ausführung der Rückwand (10) stumpfwinklig, rechtwinklig oder spitzwinklig und mit der gegebenenfalls angefasten Stirnseite oder Dichtkante und/oder Dichtfläche (9) des abzudichtenden Teiles (5) in Schließstellung zusammenwirkt.

3. Abdichtvorrichtung nach Anspruch 1 oder 2, dadurch gekennzeichnet, daß die Dichtungskammer (6) an ihrer Außenseite einen den Dichtring (2) an seiner radialen Außenseite von der Rückwand (10) der Dichtkammer (6) her so weit übergreifenden Wandungsteil (12) hat und dessen Außendurchmesser im Verhältnis zum Dichtkammerdurchmesser so weit verkleinert ist, daß dessen Stirnseite (13) eine schmale ringförmige Anlagefläche aufweist, welche als Abquetschkante (9) dient.

4. Abdichtvorrichtung nach einem der Ansprüche 1 bis 3, dadurch gekennzeichnet, daß die Stirnseite (13) des den Dichtring (2) außen übergreifenden Wandungsteiles (12) als umlaufende Schneide (9) ausgebildet ist.

5. Abdichtvorrichtung nach einem der Ansprüche 1 bis 4, dadurch gekennzeichnet, daß die den Dichtring (2) außen umgreifende Wandung (12) diesen axial so weit übergreift, daß ihre Schneide oder Abquetschkante (9), die Dichtkammer (6) abschließend, überschüssigen Dichtungswerkstoff abschert.

6. Abdichtvorrichtung nach einem der Ansprüche 1 bis 5, dadurch gekennzeichnet, daß die Außen- und/oder Innenseite des den Dichtring (2) außen umgreifenden Wandungsteiles zur Bildung einer Abquetschkante oder Schneide (9) von außen nach innen oder von innen nach außen abgeschrägt ist.

7. Abdichtvorrichtung nach einem der Ansprüche 1 bis 6, dadurch gekennzeichnet, daß hinter der Rückwand (10) der Abdichtkammer (6) ein freier Raum, insbesondere ein Einstich (14) ist und die Rückwand (10) federnd nachgiebig ausgebildet ist.

8. Abdichtvorrichtung nach einem der Ansprüche 1 bis 7, dadurch gekennzeichnet, daß die Rückwand (10) der Dichtkammer (6) mindestens bereichsweise schräg von innen nach außen zu der Abquetschkante oder Schneidkante (9) und/oder dem den Dichtring (2) außen umgreifenden Wandungsteil (12) vom Gewinde (3) wegführend ansteigt.

9. Abdichtvorrichtung nach einem der Ansprüche 1 bis 8, dadurch gekennzeichnet, daß die Dichtkammer (6) mit ihrer Rückwand (10) und/oder mit ihrem außen umfassenden Wandungsteil zumindest bereichsweise von innen nach außen in Richtung Abquetsch- oder Schneidkante (9) zum Gewinde (3) hinführend ansteigt.

10. Abdichtvorrichtung nach einem der Ansprüche 1 bis 9, dadurch gekennzeichnet, daß die den Dichtring (2) außen umgreifende Wandung (12) im Verhältnis zur Wandungslänge so dimensioniert ist, daß sie beim Festziehen nachgiebig, insbesondere stauchbar ist.

11. Abdichtvorrichtung nach einem der Ansprüche 1 bis 10, dadurch gekennzeichnet, daß die den Dichtring (2) außen umgreifende Wandung (12) Schwächungen (17), Nuten (18), wenigstens eine nach innen (19) oder eine nach außen gerichtete Wölbung (20) od. dgl. die axiale Nachgiebigkeit und Stauchbarkeit fördernde Verformung aufweist.

12. Abdichtvorrichtung nach einem der Ansprüche 1 bis 11, dadurch gekennzeichnet, daß die den Dichtring (2) umfassende Wandung (12) in Ausgangsstellung in ihrem Querschnitt schräg nach außen, oder etwa parallel zur Mittelachse und/oder mit ihrer Stirnseite schräg nach außen gerichtet ist, wobei die Stauchung der Wandung (12) nach außen eine zusätzliche Vergrößerung der Dichtfläche in radialer Richtung nach außen ergibt.

13. Abdichtvorrichtung nach einem der Ansprüche 1 bis 12, dadurch gekennzeichnet, daß von zwei parallelen äußeren Wandungen (12) zumindest eine den Dichtring (2) in Ausgangsstellung ganz oder teilweise übergreift, und vorzugsweise eine die Dichtkammer (6) begrenzende Abquetschkante oder Schneide (9) hat und deren andere in Gebrauchsstellung die Dichtkammerwand nach außen als Sichtblende verdeckt.

14. Abdichtvorrichtung nach einem der Ansprüche 1 bis 13, dadurch gekennzeichnet, daß an der Oberseite der hinter der Rückwand (10) der Dichtkammer (6) befindliche Ausnehmung (14) ein ringförmiger, über diese Ausnehmung (14) ragender Steg (21) vorgesehen ist.

15. Abdichtvorrichtung nach einem der Ansprüche 1 bis 14, dadurch gekennzeichnet, daß zwischen der Rückwand (10) und dem äußeren Wandungsteil (12) ein Ausweichraum (16) vorgesehen ist.

16. Abdichtvorrichtung nach einem der Ansprüche 1 bis 15, dadurch gekennzeichnet, daß die Dichtkammer (6) wenigstens teilweise, zumindest ihr äußerer Wandungsteil (12) gegebenenfalls an der Rückwand (10) oder einem Teil der Rückwand (23) angeschlagen, als separates Dichtkammerteil (22), insbesondere als an dem einen abzudichtenden Teil (4) anbringbarer Ring ausgebildet ist, welcher gegebenenfalls in der Dichtkammer (6) zur Bildung einer zusätzlichen Dichtkante (27) vorzugsweise stufenförmig abgesetzt ist (Fig. 11, 11a, 11b).

17. Abdichtvorrichtung nach Anspruch 16, dadurch gekennzeichnet, daß das Dichtkammerteil (22) mit einer Ausdrehung (26) als Anschlagfläche gegen das abzudichtende Teil (4) paßt.

18. Abdichtvorrichtung nach einem der Ansprüche 1 bis 17, dadurch gekennzeichnet, daß die äußere Wandung (12) sich in axialer Richtung erstreckende Schlitze (24), Nuten (25) od. dgl. Ausnehmungen hat.

19. Abdichtvorrichtung nach einem der Ansprüche 1 bis 18, dadurch gekennzeichnet, daß die Schlitze (24), Nuten (25) od. dgl. die äußere Wandung (12) ganz oder nur teilweise durchsetzen und ihr Querschnitt von parallelen, radial oder schräg verlaufenden und/oder schräg zueinander angeordneten Wänden begrenzt sind.

## Claims

1. A sealing device (1) including a sealing ring (2) which is made of yielding material, is acted upon axially and takes the form of a profile, in particular an O-ring, between two parts (4, 5) which are to be sealed and are adapted to be screwed home by means of thread (3), at least one of which has a circular ring-shaped cross section at least in the sealing area, the sealing ring (2) being held at the end of a male thread (3) in a sealing chamber (6) partly enclosing said ring, said chamber being closed radially outwardly or almost closed by screwing in and tightening the part to be sealed, and the front end (7) which belongs to the other part and may be chamfered comes to rest against the sealing ring (2) and deforms the latter by the contact pressure, characterized by having on one of the parts (4, 5) a squeezing off edge or cutting edge (9) which cooperates with the other part (5, 4) for shearing off surplus sealing material displaced by screwing home the parts (4, 5).

2. The sealing device as claimed in claim 1, characterized in that the rear wall (10) which is averted from the thread and belongs to the sealing chamber (6) together with the outside (11) of the part (4) featuring said rear wall, e. g. of a plug or valve body, forms the squeezing off edge or cutting edge (9), said edge lying approximately on the outer diameter, or as may be required, slightly over the outer diameter of the connecting thread (3) to increase the sealing surface and, depending on the configuration of the rear wall (10), being obtuse-angled, right angled or acute angled, and in the closed position cooperating with the front end which may be chamfered or the sealing edge and/or sealing surface (9) of the part (5) to be sealed.

3. The sealing device as claimed in claim 1 or claim 2, characterized in that the sealing chamber (6) has on its outside a wall part (12) which engages over the sealing ring (2) at the radial outside thereof from the rear wall (10) of the sealing chamber (6) to such an extent and the outside diameter of said wall part is reduced in relation to the sealing chamber diameter to such an extent that the front end (13) of said wall part has a narrow, ring-shaped bearing surface serving as the squeezing off edge (9).

4. The sealing device as claimed in any one of claims 1 to 3, characterized in that the front end (13) of the wall part (12) outwardly engaging over the sealing ring (2) takes the form of a circumferential cutting edge (9).

5. The sealing device as claimed in any one of claims 1 to 4, characterized in that the wall (12) outwardly embracing the sealing ring (2) engages over the latter axially so far that in closing the sealing chamher (6) the cutting edge or squeezing off edge (9) of said wall shears off surplus sealing material.

6. The sealing device as claimed in any one of claims 1 to 5, characterized in that the outside and/or inside of the wall part outwardly embracing the sealing ring (2) is bevelled from the outside to the inside or from the inside to the outside to form a squeezing off edge or cutting edge (9).

7. The sealing device as claimed in any one of claims 1 to 6, characterized in that behind the rear wall (10) of the sealing chamber (6) there is a free space, in particular a recess (14) and the rear wall (10) is devised to be springily yielding.

8. The sealing device as claimed in any one of claims 1 to 7, charactetized in that the rear wall (10) of the sealing chamber (6) rises, at least in areas, at slant from the inside to the outside to the squeezing off edge or cutting edge (9) and/or to the wall part (12) outwardly embracing the sealing ring (2), the rise leading away from the thread (3).

9. The sealing device as claimed in any one of claims 1 to 8, characterized in that the sealing chamber (6) with the rear wall (10) thereof and/or with the wall part outwardly enclosing said chamber rises, at least in areas, from the inside to the outside in the direction of the squeezing off edge or cutting edge (9), the rise leading to the thread (3).

10. The sealing device as claimed in any one of claims 1 to 9, characterized in that the wall (12) outwardly embracing the sealing ring (2) is dimensioned in relation to the wall length in such a manner as to be yielding, in particular compressible, upon tightening.

11. The sealing device as claimed in any one of claims 1 to 10, characterized in that the wall (12) outwardly embracing the sealing ring (2) has weakenings (17), grooves (18) at least one curvature (20) directed inwardly (19) or outwardly or a similar deformation promoting the axial yieldingness and compressibility.

12. The sealing device as claimed in any one of claims 1 to 11, characterized in that in the initial position the wall (12) enclosing the sealing ring (2) is directed in its cross section at a slant to the outside, or about parallel to the central axis and/or with its end face at a slant to the outside, the compression of the wall (12) to the outside producing an additional enlargement of the sealing surface in the radial direction to the outside.

13. The sealing device as claimed in any one of claims 1 to 12, characterized in that of two parallel external walls (12) at least one engages wholly or partly over the sealing ring (2) in the initial position, and has preferably one squeezing off edge or cutting edge (9) defining the sealing chamber (6) and in the position for use the other one thereof outwardly covering the sealing chamber wall as a screen.

14. The sealing device as claimed in any one of claims 1 to 13, characterized in that at the upper side of the recess (14) located behind the rear wall (10) of the sealing chamber (6) there is a ring-shaped web (21) projecting over said recess (14).

15. The sealing device as claimed in any one of claims 1 to 14, characterized in that an escape space (16) is disposed between the rear wall (10) and the outer wall part (12).

16. The sealing device as claimed in any one of claims 1 to 15, characterized in that the sealing chamber (6) at least in part, at least the outer wall part (12) thereof butting against the rear wall (10) or a part of the rear wall (23) takes the form of a separate sealing chamber part (22), in particular a ring to be applied to the one part (4) to be sealed, said ring being recessed, preferably by steps, in the sealing chamber (6) to form an additional sealing edge (27) (Figs. 11, 11a, 11b).

17. The sealing device as claimed in claim 16, characterized in that the sealing chamber part (22) fits with a groove (26) as bearing surface against the part (4) to be sealed.

18. The sealing device as claimed in any one of claims 1 to 17, characterized in that the outer wall (12) has slits (24), grooves (25) or similar recesses extending in the axial direction.

19. The sealing device as claimed in any one of claims 1 to 18, characterized in that the slits (24), grooves (25) or the like traverse the outer wall (12) wholly or only partly and the cross section thereof are defined by parallel walls, walls extending radially or at a slant and/or walls disposed at a slant to one another.

**Revendications**

1. Dispositif d'étanchéité (1) présentant une bague d'étanchéité (2) en un matériau souple, soumise à des efforts axiaux et réalisée sous la forme d'une bague profilée, en particulier d'une bague torique, entre deux pièces à étancher (4, 5) qui sont vissables au moyen de filetages (3) et dont au moins l'une possède une section en forme d'anneau circulaire au moins dans la zone d'étanchement, la bague d'étanchéité (2) étant retenue, à l'extrémité d'un filetage externe (3), dans une chambre d'étanchéité (6) qui l'entoure partiellement et est obturée ou quasiment obturée vers l'extérieur, dans le sens radial, par suite du vissage et du blocage de la pièce à étancher, la face extrême (7) éventuellement biseautée de l'autre pièce venant s'appliquer contre la bague d'étanchéité (2) et déformant cette dernière par la pression de compression, caractérisé par le fait qu'il présente, sur l'une des pièces (4, 5), une arête d'écrasement ou de sectionnement (9) qui coopère avec l'autre pièce (5, 4) pour éliminer, par cisaillement, du matériau d'étanchement excédentaire refoulé par le vissage des pièces (4, 5).

2. Dispositif d'étanchéité selon la revendication 1, caractérisé par le fait que la paroi postérieure (10) de la chambre d'étanchéité (5), tournée à l'opposé du filetage, forme avec la face externe (11) de la pièce (4) qui en est munie, par exemple d'une pièce de colmatage ou d'obturation, l'arête d'écrasement ou de sectionnement (9) qui, reposant sensiblement sur le diamètre externe ou, selon les exigences, légèrement au-dessus du diamètre externe du filetage de solidarisation (3) en vue d'agrandir la surface d'étanchement, forme un angle obtus, droit ou aigu selon la réalisation de la paroi postérieure (10), et coopère en position fermée avec la face extrême ou l'arête d'étanchement et/ou la surface d'étanchement (9), éventuellement biseautée, de la pièce à étancher (5).

3. Dispositif d'étanchéité selon la revendication 1 ou 2, caractérisé par le fait que la chambre d'étanchéité (6) présente, à sa face externe, une zone de paroi (12) qui déborde sur la face externe radiale de la bague d'étanchéité (2), à partir de la paroi postérieure (10) de la chambre d'étanchéité (6), et dont le diamètre externe est réduit par rapport au diamètre de la chambre d'étanchéité, lesdits débordement et réduction étant tels que la face extrême (13) de ladite zone présente une étroite surface annulaire de contact qui sert d'arête d'écrasement (9).

4. Dispositif d'étanchéité selon l'une des revendications 1 à 3, caractérisé par le fait que la face extrême (13) de la zone de paroi (12) débordant extérieurement sur la bague d'étanchéité (2) est réalisée sous la forme d'un tranchant circonférentiel (9).

5. Dispositif d'étanchéité selon l'une des revendications 1 à 4, caractérisé par le fait que la paroi (12) ceinturant extérieurement la bague d'étanchéité (2) déborde sur cette dernière, dans le sens axial, d'une ampleur telle que son tranchant ou arête d'écrasement (9), obturant la chambre d'étanchéité (6), élimine par cisaillement du matériau d'étanchement excédentaire.

6. Dispositif d'étanchéité selon l'une des revendications 1 à 5, caractérisé par le fait que la face externe et/ou interne de la zone de paroi ceinturant extérieurement la bague d'étanchéité (2) est biseautée de l'extérieur vers l'intérieur ou de l'intérieur vers l'extérieur, pour former une arête d'écrasement ou un tranchant (9).

7. Dispositif d'étanchéité selon l'une des revendications 1 à 6, caractérisé par le fait qu'un espace libre, notamment une dépouille (14) se trouve derrière la paroi postérieure (10) de la chambre d'étanchéité (6), et la paroi postérieure (10) est réalisée douée de souplesse élastique.

8. Dispositif d'étanchéité selon l'une des revendications 1 à 7, caractérisé par le fait que la paroi postérieure (10) de la chambre d'étanchéité (5) monte à l'oblique au moins par zones de l'intérieur vers l'extérieur, à l'écart du filetage (3), vers l'arête d'écrasement ou l'arête de sectionnement (9) et/ou vers la zone de paroi (12) ceinturant extérieurement la bague d'étanchéité (2).

9. Dispositif d'étanchéité selon l'une des revendications 1 à 8, caractérisé par le fait que la chambre d'étanchéité (6) monte au moins par zones de l'intérieur vers l'extérieur, par sa paroi postérieure (10) et/ou par sa zone de paroi ceinturant extérieurement, vers le filetage (3) en direction de l'arête d'écrasement ou de sectionnement (9).

10. Dispositif d'étanchéité selon l'une des revendications 1 à 9, caractérisé par le fait que la paroi (12) ceinturant extérieurement la bague d'étanchéité (2) est dimensionnée, par rapport à la longueur de paroi, de manière qu'elle soit souple et puisse notamment être refoulée au cours du blocage.

11. Dispositif d'étanchéité selon l'une des revendications 1 à 10, caractérisé par le fait que la paroi (12) ceinturant extérieurement la bague d'étanchéité (2) présente des zones affaiblies (17), des gorges (18), au moins un bombement dirigé vers l'intérieur (19) ou vers l'extérieur (20), ou bien une déformation similaire favorisant la souplesse axiale et l'aptitude au refoulement axial.

12. Dispositif d'étanchéité selon l'une des revendications 1 à 11, caractérisé par le fait que, dans la position initiale, la paroi (12) ceinturant la bague d'étanchéité (2) est dirigée à l'oblique vers l'extérieur par sa section, ou bien sensiblement parallèlement à l'axe médian et/ou à l'oblique vers l'extérieur par sa face extrême, le refoulement de la paroi (12) vers l'extérieur conférant un agrandissement supplémentaire de la surface d'étanchement vers l'extérieur, dans le sens radial.

13. Dispositif d'étanchéité selon l'une des revendications 1 à 12, caractérisé par le fait que, parmi deux parois externes parallèles (12), au moins l'une coiffe totalement ou partiellement la bague d'étanchéité (2) en position initiale, et possède, de préférence, une arête d'écrasement ou un tranchant (9) qui délimite la chambre d'étanchéité (6), tandis que l'autre en position d'utilisation, recouvre vers l'extérieur la chambre d'étanchéité, en tant que diaphragme de visualisation.

14. Dispositif d'étanchéité selon l'une des revendications 1 à 13, caractérisé par le fait qu'il est prévu, à la face supérieure de l'évidement (14) situé derrière la paroi postérieure (10) de la chambre d'étanchéité (6), une nervure annulaire (21) dépassant au-delà de cet évidement (14).

15. Dispositif d'étanchéité selon l'une des revendications 1 à 14, caractérisé par le fait qu'une chambre d'évitement (16) est prévue entre la paroi postérieure (10) et la zone de paroi externe (12).

16. Dispositif d'étanchéité selon l'une des revendications 1 à 15, caractérisé par le fait qu'au moins en partie la chambre d'étanchéité (6), au moins sa zone de paroi externe (12), éventuellement contre-dépouillée sur la paroi postérieure (10) ou sur une partie (23) de cette paroi postérieure, est réalisée sous la forme d'une partie distincte (22) de la chambre d'étanchéité, en particulier sous la forme d'une bague qui peut être installée sur l'une (4) des pièces à étancher et qui est étagée de préférence, en forme de gradin, éventuellement dans la chambre d'étanchéité (6), afin de former une arête d'étanchement supplémentaire (27) (figures 11, 11a, 11b).

17. Dispositif d'étanchéité selon la revendication 16, caractérisé par le fait que la partie (22) de la chambre d'étanchéité s'adapte, sur la pièce à étancher (4), par un décolletage (26) faisant office de surface de butée.

18. Dispositif d'étanchéité selon l'une des revendications 1 à 17, caractérisé par le fait que la paroi externe (12) présente des fentes (24), des gorges (25) ou évidements similaires s'étendant dans le sens axial.

19. Dispositif d'étanchéité selon l'une des revendications 1 à 18, caractérisé par le fait que les fentes (24), gorges (25) ou configurations analogues traversent intégralement ou seulement en partie la paroi externe (12), leurs sections étant délimitées par des parois parallèles qui s'étendent radialement ou obliquement et/ou sont disposées mutuellement à l'oblique.

Fig.1

Fig.2

Fig.3

Fig.4

Fig.5

Fig.6

Fig.5b

Fig.5c 21

Fig.6a

Fig.6b

Fig.6c

Fig.6d

Fig.6e

Fig.6f

Fig.7a

0 152 617

Fig.7d Fig.9a Fig.10b

Fig.7c Fig.7f Fig.10a

Fig.7b Fig.7e Fig.9b

Fig. 10

Fig. 9

Fig. 8

Fig. 7

Fig. 11

Fig. 11a

Fig. 11d

Fig. 11b

Fig. 11c

Fig. 12

Fig 12 b

Fig. 12 c

Fig. 12 a

Fig. 3a 12
9
13
2

Fig. 3b
2

Fig. 3c 12
2

Fig. 3d
2
6 3

Fig. 3e 12
9
2

Fig. 3f 9
12
2

Fig. 3g
12
11
9 9
2

Fig. 4a
13
9
2
6

Fig. 4b 12
13
9
4
2
10

0 152 617

Fig.4c

Fig.4d

Fig.4e

Fig.4f

Fig.4g

Fig.4h

Fig.4i

Fig.4k

Fig.5a